# EUROPEAN PATENT APPLICATION

(11) **EP 1 874 063 A2**
(43) Date of publication of application: **02.01.2008**
(21) Application number: 07252510.8
(22) Date of filing: 20.06.2007
(51) Int. Cl.: H04N 9/31

(54) **Projection apparatus**

(30) Priority: 20.06.2006 KR 20060055506
(71) Applicant: LG ELECTRONICS INC., Seoul, 150-721 (KR)
(72) Inventor: Kim, Nam Sik, Seoul 137-724 (KR)
(74) Representative: Camp, Ronald

(57) **Abstract**

A display apparatus including a plurality of lamps emitting light beams for illumination of the display apparatus is disclosed. The plurality of lamps are located on a circular or spherical plane about a common focal point, and have the same distance from the focal point as one another.

## Description

### BACKGROUND OF THE INVENTION

### Field of the Invention

The present invention relates to a display apparatus. It more particularly relates to a lighting device for a display apparatus.

### Discussion of the Related Art

As satellite and digital broadcasting begins in earnest, demands and interests on large-screen displays having a high-brightness are increasing. Accordingly, the expectation and role of a projection apparatus are rapidly increasing.

A projection apparatus controls light emitted from a high-power lamp light source by turning on or off the light in the unit of a pixel. The projection apparatus is classified into a single-panel type, a double-panel type, and a triple-panel type, in accordance with the number of live valves forming an image.

In a single-panel type projection apparatus, although the size of an optical system can be reduced more than a triple-panel type projection apparatus, white light has to be separated into Red, Green, and Blue light components in a sequential manner, for the use of the light. Therefore, the single-panel type projection apparatus has a deterioration in the transmission efficiency of light as low as one third of that of the triple-panel type projection apparatus. For this reason, in the case of the single-panel projection apparatus, there is an effort to increase the number of light sources, for the sake of improving the transmission efficiency of light.

However, the effort of increasing the number of light sources imparts the following problems to the single-panel projection apparatus.

In the case where light sources include a plurality of lamps, the advance paths of light beams emitted from the respective lamps must be overlapped with one another, and therefore, the loss of light is inevitable. Accordingly, even if N lamps are used to constitute the light sources, it is impossible to achieve the brightness of N times as high as the brightness of a single lamp. That is, when using the plurality of lamps as the light sources, it causes an increase in the volume of a projection apparatus, but the brightness of light emitted from the light sources is not as great as in the increased number of lamps.

### SUMMARY OF THE INVENTION

Accordingly, the present invention is directed to an improved projection apparatus that seeks to substantially obviate one or more problems due to limitations and disadvantages of the related art.

Advantages, objects, and features of the invention will be set forth in part in the description which follows and in part will become apparent to those having ordinary skill in the art upon examination of the following or may be learned from practice of the invention. The advantages of the invention may be realized and attained by the structure particularly pointed out in the written description and claims hereof as well as the appended drawings.

To achieve other advantages and in accordance with the purpose of the invention, as embodied and broadly described herein, a display apparatus comprising: a plurality of lamps emitting light beams for illumination of the display apparatus, wherein the plurality of lamps are located on a circular or spherical plane about a common focal point, and have the same distance from the focal point as one another.

In another aspect of the present invention, there is provided a display apparatus comprising: a plurality of lamps emitting light beams for illumination of the display apparatus, wherein the light beams emitted from the plurality of lamps have a focusing angle of 20 to 30 degrees.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a view illustrating a light source for use in a general projection apparatus;

FIG. 2A is a view illustrating a light emitting element for the light source shown in FIG. 1;

FIG. 2B is a view illustrating a light emitting element of a lamp for use in a projection apparatus according to an embodiment of the present invention;

FIG. 3 is a view illustrating an embodiment of a lamp using the light emitting element shown in FIG. 2A;

FIGs. 4A and 4B are views illustrating another embodiment of the present invention, in which two lamps shown in FIG. 2B are used;

FIG. 5 is a view illustrating a further embodiment of the present invention, in which four lamps shown in FIG. 2B are used; and

FIG. 6 is a view illustrating an embodiment of a display apparatus according to the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

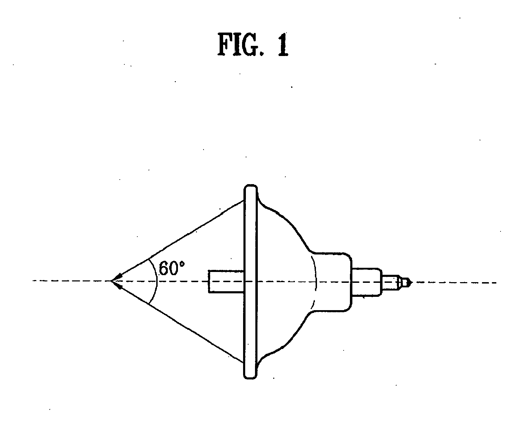

FIG. 1 is a view illustrating a light source for use in a general projection apparatus. In FIG. 1, a super high pressure mercury arc lamp is shown as an embodiment of the light source for use in the general projection apparatus. The mercury arc lamp utilizes the discharge of mercury gas, and is usable as a light source by virtue of its several advantages, for example, a high brightness, low electricity consumption, great luminous flux, and a higher lighting efficiency than that of an electric lamp. In FIG. 1, the light source is formed, at a side thereof, with a reflective plane such that light beams, emitted from a light emitting element, are reflected by the reflective plane and thereby, are advanced in an opposite direction. As shown in FIG. 1, the light beams, reflected by the reflective plane, are converged on a focal point. In view of a superior optical performance, for example, an improved light transmission efficiency and high contrast ratio, it is preferable that an angle, defined by the light beams incident on the focal point, be approximately 60 degrees.

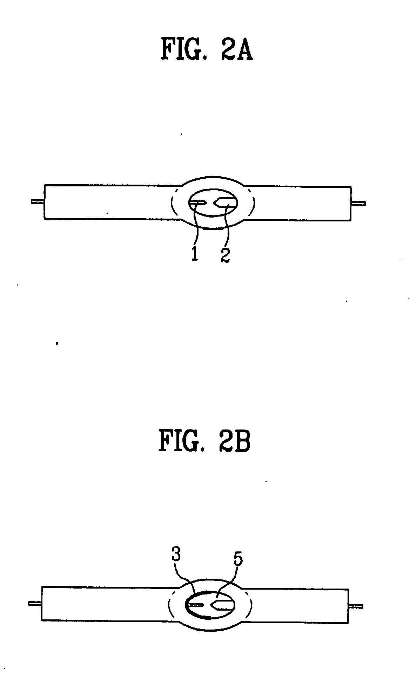

FIG. 2A is a view illustrating the light emitting element of the light source shown in FIG. 1. The light emitting element of the super high pressure mercury arc lamp is filled with discharge gas, such as mercury gas, etc., under a high pressure. As shown, the light emitting element includes an anode 1 and a cathode 2, which are spaced apart from each other by a predetermined distance.

FIG. 2B is a view illustrating a light emitting element of a lamp for use in a projection apparatus in accordance with the present invention. In FIG. 2B, a reflective plane is formed at a side of the light emitting element 5, and a dichroic layer 3 is formed at an opposite side of the reflective plane. With this configuration, when light beams are emitted from the light emitting element 5 and are advanced to the dichroic layer 3, the light beams are sequentially reflected by the dichroic layer 3 and the reflective plane, and thereafter, are advanced in an opposite direction of the reflective plane. Although not shown in FIG. 2B, the reflective plane is located at the opposite side of the dichroic layer 3, on the basis of a discharge space 5.

In the prior art as shown in FIG. 2A, since light beams are initially advanced in an opposite direction of the reflective plane, there inevitably occurs the loss of light beams. On the other hand, according to the present invention as shown in FIG. 2B, the light beams are initially reflected by the dichroic layer 3 and finally, are again reflected by the reflective plane.

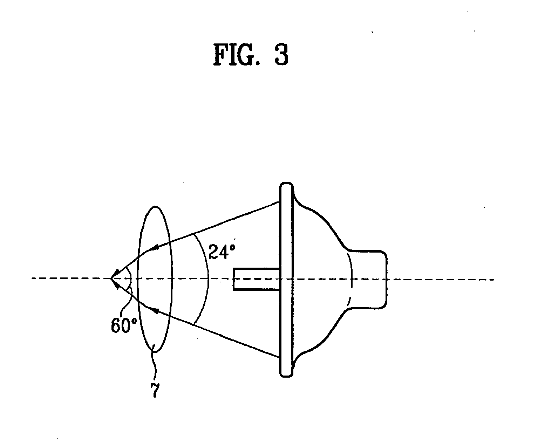

FIG. 3 is a view illustrating an embodiment of a lamp using the light emitting element shown in FIG. 2A. As will be appreciated, the larger the curvature of the reflective plane, the larger the overall size of the lamp, and consequently, the large size lamp has the problem of increasing the volume of a projection apparatus. Therefore, it is preferable to use a small curvature reflective plane. However, the small curvature reflective plane is unavailable in the case where light beams should be incident on a focal point by an angle of approximately 60 degrees. To solve this problem, as shown in FIG. 3, a focusing lens 7 may be provided in front of the lamp. In this case, as shown in FIG. 3, although light beams, emitted from the lamp having the small curvature reflective plane, originally have a focal point convergence angle of approximately 24 degrees, the light beams can be converged on a focal point by an angle of approximately 60 as they are refracted while passing through the focusing lens 7.

The projection apparatus of the present invention includes a plurality of lamps as light sources, and each lamp has the dichroic layer as shown in FIG. 2B. When the light source as shown in FIGs. 1 and 2A is used, there is the problem in that light beams, emitted from a plurality of light sources, are converged on a focal point by an angle of 120 degrees twice that of 60 degrees, and this may result in a deterioration in the transmission efficiency of light. Also, when the light source having a small curvature reflective plane as shown in FIG. 2A is used, light beams, incident on the focal point, have an angle of approximately 30 degrees. Therefore, by using a plurality of lamps as described above, the angle of light beams incident on the focal point can be regulated to a value of approximately 60 degrees. However, as described above, the respective lamps shown in FIG. 2A may cause the loss of light. Also, using the focusing lens as shown in FIG. 3 has the problem of increasing the volume of a display apparatus.

Accordingly, the present invention proposes that a plurality of lamps, each having a dichroic layer as shown in FIG. 2B, are used as light sources. As described above, this has the effect of reducing the angle, defined by light beams incident on a focal point, to a value of approximately 24 degrees by providing each lamp with the small curvature reflective plane, without causing the loss of light from the respective lamps. More specifically, a focusing angle of light beams, emitted from the respective lamps to the focal point, can be regulated to a range of 20 to 30 degrees.

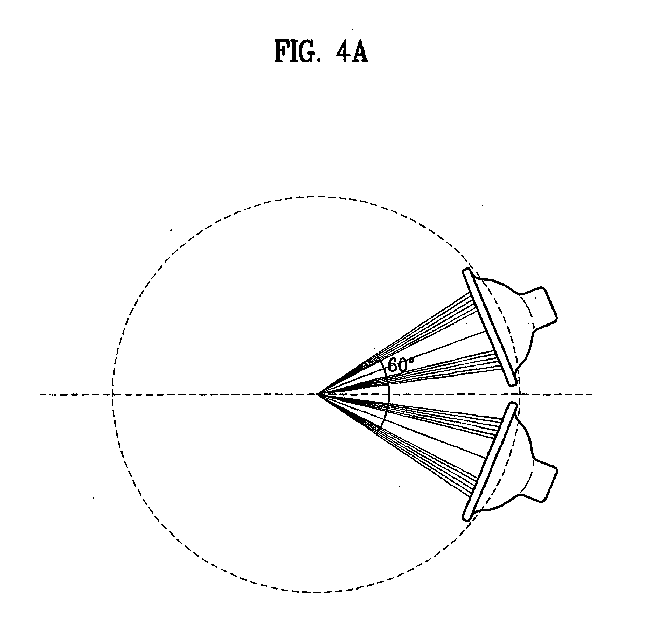

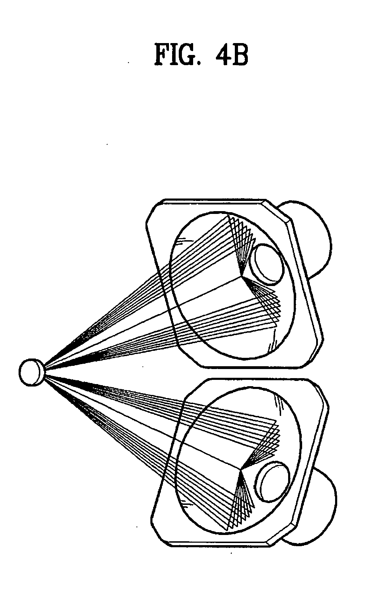

FIGs. 4A and 4B are views illustrating another embodiment of the present invention, in which two light sources, each including the light emitting element shown in FIG. 2B, are used. In the present embodiment, two lamps are arranged side by side to constitute light sources, and each light source has a dichroic layer formed at a side of the light emitting element. In this case, light beams, which are emitted from the respective lamps and are incident on a focal point, have an angle of approximately 20 to 30 degrees. Consequently, light beams, which are emitted from all the lamps and are incident on the focal point, may have an angle of approximately 60 degrees. In the prior art, the respective lamps may be arranged in opposite directions from one another or may be arranged perpendicular to one another. However, in the present invention, the lamps are arranged to come into contact with one another. As a result, the present invention can achieve an improvement in the light transmission efficiency and contrast ratio as described above. Preferably, the reflective plane, provided at each of the above described two lamps, is an elliptical or parabolic plane. In this case, since focal points of all the light sources, i.e. the lamps, have to coincide with one another, a focal point of the reflective plane of one lamp has to coincide with a focal point of the reflective plane of another lamp. That is, the present invention has a feature in that the light beams, emitted from the two lamps to a focal point, have the same length as each other. Also, under the assumption that the two lamps are arranged to come into contact with each other as described above, an imaginary line obtained by connecting spherical planes of the respective lamps is arched relative to a plane including the focal point, and defines a part of a three-dimensional spherical plane.

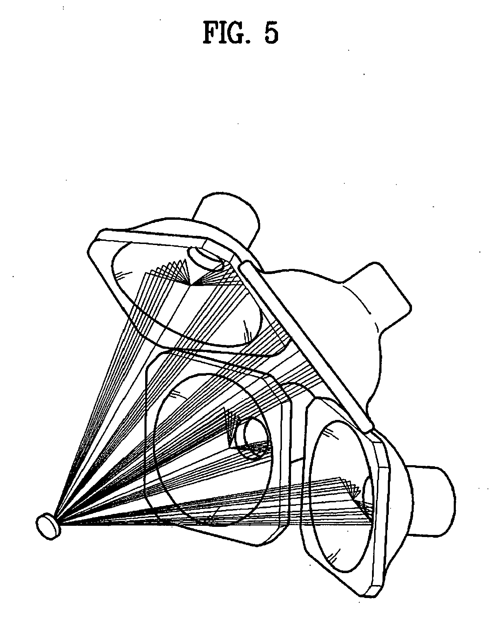

FIG. 5 is a view illustrating a further embodiment of the present invention, in which four light sources, each including the light emitting element shown in FIG. 2B, are used. In FIG. 5, four lamps are used to constitute the light sources, and each lamp has a dichroic layer. In the present embodiment, preferably, light beams, which are reflected from the respective lamps and are incident on a focal point, have an angle of approximately 15 degrees, and a focal point of the reflective plane of one lamp has to coincide with a focal point of the reflective plane of another lamp. Also, the four lamps are arranged to come into contact with each other in a square shape, and an imaginary line obtained by connecting reflective planes included in the respective lamps defines a spherical plane about the focal point.

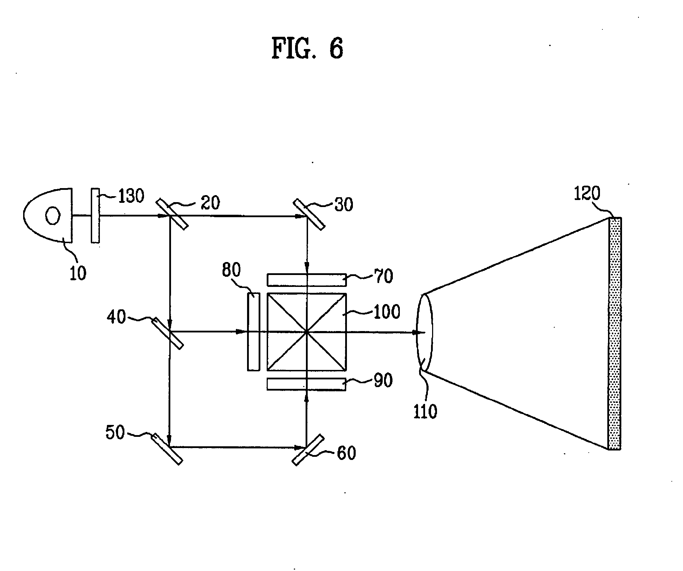

FIG. 6 is a view illustrating an embodiment of a projection apparatus according to the present invention. The present embodiment relates to the projection apparatus using the above described lamp as a light source. The projection apparatus in accordance with the present embodiment comprises a light source 10, a polarizing beam splitter (PBS) 130, a red filter 20, a red reflective plane 30, a blue filter 40, a first blue reflective plane 50, a second blue reflective plane 60, a red liquid crystal display (LCD) 70, a green LCD 80, a blue LCD 90, a prism 100, a projection lens 110, and a screen 120. The light source 10, as shown in FIGs. 4A, 4B, and 5, has a feature of using a plurality of lamps each having a dichroic layer.

Now, the operation of the above described projection apparatus in accordance with the present invention will be described.

If a light beam is emitted from the light source 10, the light beam is polarized in a single direction by the polarizing beam splitter 130. Then, the polarized light beam is advanced to the red filter 20. The red filter 20 transmits a red light component, and reflects green and blue light components. Subsequently, the red light component, having passed through the red filter 20, is reflected by the red mirror 30, so as to be irradiated on the red LCD 70. Then, of the green and blue light components reflected by the red filter 20, the blue filter 40 transmits the blue light component, and reflects the green light component. The reflected green light component is irradiated on the green LCD 80. Then, the blue light component, having passed through the blue filter 40, is reflected by the first blue reflective plane 50 and the second blue reflective plane 60 in sequence, and thereafter, is irradiated on the blue LCD 90. The above described red, green, and blue LCDs 70, 80, and 90 display red, green, and blue images, respectively, on the basis of an electric signal. The resulting respective color images are composed by the prism 100. The resulting composed color image is advanced to the projection lens 100 such that the image is enlarged by the projection lens 110, to thereby be projected on the screen 120.

In conclusion, as apparent from the above description, a plurality of lamps can be used as light sources, and furthermore, an angle, defined by overall light beams incident on a focal point, can be approximately 60 degrees suitable to achieve an improvement in the light transmission efficiency and contrast ratio. Moreover, since each of the plurality of lamps used as the light sources has a dichroic layer, the present invention has the effect of reducing the loss of light.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A display apparatus comprising: a plurality of lamps for emitting light beams; a polarizing beam splitter for converting the light beams, emitted from the lamps, into light beams polarized in a single direction; color separating filters for separating the light beams, polarized in the single direction, into red, green, and blue color light components; and image displays for displaying images of the separated red, green, and blue color light components,
wherein the plurality of lamps are located on a circular or spherical plane about a common focal point, and have the same distance from the focal point as one another.

2. The display apparatus according to claim 1, wherein each of the lamps is subjected to a dichroic coating.

3. The display apparatus according to claim 2, wherein each of the lamps comprises:
a dichroic layer for reflecting light beams, emitted from a light emitting element, toward a reflector; and
the reflector for reflecting the light beams, reflected by the dichroic layer, toward a focal point.

4. The display apparatus according to claim 3, wherein the reflector, included in each of the lamps, comprises a spherical plane relative to the focal point.

5. The display apparatus according to claim 1, wherein the plurality of lamps are arranged to come into contact with one another.

6. The display apparatus according to claim 1, wherein each of the lamps is a super high pressure mercury arc lamp.

7. The display apparatus according to claim 1, wherein the light beams, which are emitted from the respective lamps and incident on the focal point, have a focusing angle of 20 to 30 degrees.

8. The display apparatus according to claim 1, wherein the image displays are liquid crystal displays (LCDs).

9. A display apparatus comprising: a plurality of lamps for emitting light beams; a polarizing beam splitter for converting the light beams, emitted from the lamps, into light beams polarized in a single direction; color separating filters for separating the light beams, polarized in the single direction, into red, green, and blue color light components; and image displays for displaying images of the separated red, green, and blue color light components,
wherein the light beams emitted from the respective lamps have a focusing angle of 20 to 30 degrees.

10. The display apparatus according to claim 9, wherein each of the lamps is subjected to a dichroic coating.

11. The display apparatus according to claim 10, wherein each of the lamps comprises:
a dichroic layer for reflecting light beams, emitted from a light emitting element, toward a reflector; and
the reflector for reflecting the light beams, reflected by the dichroic layer, toward a focal point.

12. The display apparatus according to claim 11, wherein the dichroic layer and the reflector are arranged at opposite sides of a discharge space inside the lamp.

13. The display apparatus according to claim 11, wherein the plurality of lamps comprise two lamps arranged to come into contact with each other, and the reflector, included in each of the lamps, comprises an arched plane.

14. The display apparatus according to claim 11, wherein the plurality of lamps comprise four lamps arranged to come into contact with one another in a square shape, and the reflector, included in each of the lamps, comprises a spherical plane.
